# EUROPEAN PATENT APPLICATION

(11) **EP 4 610 818 A1**
(43) Date of publication of application: **03.09.2025**
(21) Application number: 24382228.5
(22) Date of filing: 01.03.2024
(51) Int. Cl.: G06F 9/38

(54) **METHODS FOR TRAINING A LOAD-STORE DEPENDENCE PREDICTOR AND FOR PREDICTING MEMORY DEPENDENCE BASED ON THE PATH BETWEEN DEPENDENT INSTRUCTIONS AND A PROCESSOR ASSOCIATED WITH THEM**

(71) Applicant: Universidad de Murcia, 30003 Murcia (ES)
(72) Inventor: ROS BARDISA, Alberto, 30003 Murcia (ES); KIM, Sebastián Sumin, 30003 Murcia (ES)
(74) Representative: Elion IP, S.L.

(57) **Abstract**

The disclosure refers to a computer implemented method for training a load-store dependence predictor. The load-store dependence predictor is associated with an out-of-order processor and comprises at least one prediction table. The method comprises identifying a dependence between a particular load instruction and a particular store instruction; determining a history length from the particular store instruction to the particular load instruction, the history length being the number of branches between the particular load instruction and the particular store instruction; determining a distance from the particular store instruction to the particular load instruction, the distance being the number of store instructions between the particular load instruction and the particular store instruction; and storing the dependence identified in one entry of the at least one prediction table together with context information associated with the history length and the distance previously determined.

## Description

### TECHNICAL FIELD

The present invention refers generally to processors and, more particularly, to methods for training a load-store dependence predictor, methods for predicting memory dependence based on the path between the dependent instructions and an out-of-order processor associated with them.

### BACKGROUND

Memory dependence prediction is an important technique to increase instruction and memory-level parallelism in out-of-order processors, which are crucial for high performance computing. Memory dependence prediction allows predicting whether a load instruction (hereafter "load") depends on a store instruction (hereafter "store") earlier in the code but not yet resolved due to out-of-order execution. In case a dependence is predicted, the dependent "load" waits to be executed until the conflicting "store" computes its target memory address, and then, the dependent "load" can be resolved by advancing the data from the "store" to the "load". When no dependence is predicted, the load may be executed speculatively, retrieving data from either a previously resolved store or from the cache hierarchy. When "stores" compute their target memory addresses, they look for subsequent (younger) "loads" executed according to the program order. In case of a match, a memory order violation is detected, and the "load" has to be re-executed.

However, over the years, the performance gap of state-of-the-art memory dependence predictors with respect to an ideal predictor has grown due to the increase of the pipeline width. State-of-the-art predictors brace context sensitivity, however, not-well-adjusted history lengths lead to loss of accuracy and high storage requirements.

Some proposals in memory dependence prediction that have been made over the last decades are Store Sets [G. Z. Chrysos et al., "Memory dependence prediction using store sets," in 25th Int'I Symp. on Computer Architecture (ISCA), Jun. 1998, pp. 142-153], CHT [A. Yoaz et al., "Speculation techniques for improving load related instruction scheduling," in 26th Int'l Symp. on Computer Architecture (ISCA), May 1999, pp. 42-53.], Store Vector [S. Subramaniam et al., "Store vectors for scalable memory dependence prediction and scheduling," in 12th Int'l Symp. on High-Performance Computer Architecture (HPCA), Feb. 2006, pp. 65-76], the predictor used in NoSQ [T. Sha et al., "NoSQ: Store-load communication without a store queue," in 39th Int'l Symp. on Microarchitecture (MICRO), Dec. 2006, pp. 285-296] and MDP- TAGE [A. Perais et al., "Cost effective speculation with the omnipredictor," in 27th Int'I Conf. on Parallel Architectures and Compilation Techniques (PACT), Nov. 2018, pp. 25:1-25:13].

The main limitations of state-of-the-art memory dependence predictors, such as Store Sets, CHT and Store Vectors, are that (i) the predictors link "loads" to a set of "stores" and (ii) the predictors do not explicitly leverage context information, such as branch history, in their predictions. Both limitations lead to extra unnecessary load stalls of the processor due to false positives, i.e., prediction of dependences that do not actually exist. On the other hand, more recent predictors, such as NoSQ and MDP-TAGE, track a single "store", in particular, the store distance (the number of "stores" older than the dependent "load" but younger than the conflicting "store"), and leverage the branch history to detect "loads" conflicting with "stores" from different paths that the program may take. However, the way these state-of-the-art predictors are trained make them provide suboptimal performance (for shorter stories than necessary) or drastically increase the number of stored stories (i.e., larger histories than necessary).

Therefore, there is a need in the art for a novel context-sensitive memory dependence predictor that is able to identify, for each particular load instruction, the minimum history length necessary to provide precise predictions on future dependences.

### DESCRIPTION

The load-store dependence predictor herein disclosed, in response to the detection of a conflict or dependence between a load instruction and a store instruction, is trained using: (i) information related to the branch path from the conflicting "store" to the dependent "load" that may correspond to a history length defined as the number of branches between said conflicting "store" and the corresponding dependent "load", and (ii) the distance from the conflicting "store" and the corresponding dependent "load" measured as the number of "stores" separating them from each other.

A first aspect of the disclosure is a computer implemented method for training a load-store dependence predictor. The load-store dependence predictor is associated with a processing device, such as, e.g., an out-of-order processor, and comprises at least one prediction table. As used herein, processing devices and out-of-order-processors, which are used interchangeably in the present disclosure, refer to processing units able to schedule and execute instructions out of order and speculatively to maximize the performance gain realized. As used herein, a prediction table is a table stored in a memory, preferably a hardware memory, that is used for storing and updating identified dependences for training the predictor and for predicting potential dependences that have not yet taken place.

The method comprises identifying a dependence between a particular load instruction and a particular store instruction by detecting the particular load instruction executing prior to the particular store instruction on whose data the particular load instruction depends. In other words, a conflict between a load instruction (dependent "load") that depends on the data written by a previous store instruction (conflicting "store") not still executed by the program is identified. As used herein, the terms "load instruction" and "load" refer to instructions which cause data to be loaded or read from memory. The terms "store instruction" and "store" refer to instructions which cause data to be written to memory.

The method further comprises determining a history length from the particular store instruction to the particular load instruction, the history length being defined as the number of branches between the particular load instruction and the particular store instruction. This history length discloses the branch path between the particular load instruction and the particular store instruction. Preferably, these branches are divergent branches that include conditional and/or indirect branches. These divergent branches refer to branches that can take at least two execution paths.

Then, the method determines a distance from the particular load instruction to the particular store instruction, the distance being defined as the number of store instructions between the particular load instruction and the particular store instruction.

After that, the method stores the dependence identified in one of the entries of the at least one prediction table together with context information related to the history length and the distance previously determined. As used herein, the context information is all information related to the execution of the program before the dependence is identified. Thus, the context information related to the history length and the distance previously determined may refer to that part of the context information related to the program between the executions of the particular load instruction and the particular store instruction that have generated the dependence.

Thus, the load-store dependence predictor, upon detecting a conflict or dependence between a "load" and a "store", is trained with (i) information about the path taken from the conflicting "store" to its dependent "load" and (ii) its "store" distance.

In some embodiments, the history length can be determined tracking from, for example, a global register of the out-of-order processor, the number of branches that are decoded between the particular load instruction and the particular store instruction. For example, when a "load" or "store" is decoded, said decoded "load" or "store" may receive a copy of the corresponding register value from the global register that identifies the number of branches between the particular decoded "load" or "store" and its conflicting "store" or dependent "load", respectively. When there is a conflict, the history length, i.e., the number of branches between the dependent "load" and the conflicting "store", could be obtained by calculating the difference between both register values, the one corresponding to the conflicting "store" and the one corresponding to the dependent "load". Preferably, the global register should be large enough to account for wraparounds of the counter, usually to track the maximum expected number of divergent branches in the pipeline plus one extra bit.

In some embodiments, the distance can be determined calculating a difference between a store queue index of a store instruction immediately preceding the particular load instruction and a store queue index of the particular store instruction.

In some embodiments, the load-store dependence predictor comprises a plurality of prediction tables, each prediction table being associated with a particular history length. For example, each prediction table may be associated with history lengths of 2, 3, 4, 8, 10, 16 or 32 or any other integer equal or greater than 0. Then, the step of storing the dependence comprises storing the context information related to the history length (e.g., a tag as explained later in this document) and the distance between the particular load instruction and the particular store instruction in one of the entries of one particular prediction table of the plurality of prediction tables. The particular prediction table in which the dependence is stored is selected among the plurality of prediction tables in such a way that the history length associated with the selected prediction table corresponds to the history length from the particular store instruction to the particular load instruction. In other words, the prediction table in which the dependence is to be stored is selected based on the history length of the dependence previously identified. For example, if a dependence between a "load" and "store" is identified and its history length is, e.g., 8, said dependence will be preferably stored in the prediction table associated with history lengths of size 8. In those cases in which there is not a prediction table that fits exactly with the history length between the "load" and the "store", e.g., the history length between the "load" and the "store" is 8 and the prediction table having a closer associated history length is, e.g., 7, then the history length between the "load" and the "store" can be truncated by discarding one or more of the branches so it can be stored in the table. In such cases, the branches closer to the "load" are selected to be stored and those branches farthest from the "load" are discarded. In the previous example, the 7 branches closer to the "load" would have been stored and the eighth branch would have been discarded. This truncation may reduce the reliability of the stored dependence. Alternatively, a dependence with a history length between a "load" and a "store" that does not exactly fit with the history lengths associated to the prediction tables could be stored in an entry of a prediction table having associated a history length larger than the history length between the "load" and the "store". In those cases, in which the history length has been truncated and the stored prediction results having a low reliability, the predictor may choose to store the dependence with its entire history length (i.e., without being truncated) in a prediction table having associated a history length larger than the history length of the dependence.

By having different prediction tables associated with different history lengths, the search of potential dependences for a specific "load" requires less time and computational power since for a particular history length of the potentially dependent "load", only the prediction table associated with said history length is to be searched.

In some embodiments, the prediction tables are set-associative prediction tables. Using this kind of table reduces the aliasing. In other words, by using set-associative prediction tables, the likelihood of storing more than one "load" or the same "load", with different history lengths, into the same entry of the prediction table is minimized.

In some embodiments, the history length is selected to be 'N±m', where `N' is the number of branches between the particular load instruction and the particular store instruction and 'm' in an integer equal or greater than 1. Preferably, 'm' is 1 or 2, and more preferably 'm' is 1. In some more preferred embodiments, the history length is selected to be 'N+1'.

In some embodiments, the step of storing the dependence identified in one entry of the at least one prediction table, comprises:
combining, using a hash function, the context information related to the history length with the program counter (PC) of the particular load instruction to obtain an index and a tag for the prediction table, the index indicating the entry of the at least one prediction table in which the dependence is to be stored and the tag identifying, preferably unequivocally identifying, the dependence. This tag contains the context information related to the history length;
storing the tag obtained and the distance between the particular load instruction and the particular store instruction in the entry of the prediction table indicated by the index; and
setting a confidence counter associated with the entry of the prediction table to a maximum. The confidence counter is used to disable aliased dependences that cause mispredictions.

In those embodiments in which there is one single prediction table, the history length is also stored together with the tag and the distance in the corresponding entry. In those embodiments in which the prediction table in whose entry the dependence is to be stored has a history length associated thereto (said associated history length corresponding to the history length of the dependence) there is no need of storing the corresponding history length into the respective entry.

In some embodiments, the steps of determining the history length, determining the distance and storing the dependence identified in one of the entries of the at least one prediction table is carried out at commit. In this way, the training of the load-store dependence predictor is carried out when the detected dependence is ensured to actually happen. This avoids learning long paths that are not leading to actual dependences (the dependences do not really exist in the execution of the program) and updating the predictor with unnecessary dependences. Using techniques such as eager squash and lazy squash for squashing dependent instructions is compatible with executing these parts of the method for training the load-store dependence predictor at commit.

In some embodiments, the context information related to the history length further comprises, for each branch in the history length:
at least one bit indicating the type of branch, the branch being a conditional branch and/or an indirect branch. Preferably, one or two bits will be used to indicate the type of branch;
at least one bit indicating if the branch is taken, or it is not. This at least one bit is especially useful when the branch is a conditional branch; and
a set of bits indicating the actual destination address taken by the branch.

Having all the history entries the same length makes the prediction table easier to be processed in parallel.

In some embodiments, the steps of the method for training the load-store dependence predictor are carried out by the load-store dependence predictor.

A second aspect of the disclosure is a computer implemented method for predicting a load-store dependence that makes use of a load-store dependence predictor, preferably a load-store dependence predictor trained as previously disclosed. The method comprises the steps of:
decoding a load instruction;
determining a history for the decoded load based on a set of predefined history lengths, the history being defined as the number of branches preceding the decoded load instruction indicated into the predefined history lengths. That is to say, a set of history lengths are predefined which will be based on the dependences stored in the at least one prediction table. For example, these predefined history lengths may be 2, 4 and 8 and may correspond with the history lengths associated to those dependences stored in the tables. Thus, the predictor selects a first history for the decoded load instruction corresponding to the two branches preceding the decoded load instruction (for history length 2), a second history for the decoded load instruction corresponding to the four branches preceding the decoded load instruction (for history length 4) and a third history for the decoded load instruction corresponding to the eight branches preceding the decoded load instruction (for history length 8). The greater the number of predefined history lengths, the more accurate the prediction will be, but the more searches in the prediction tables are necessary increasing the resources consumption;
combining, using a hash function, context information of each one of the determined histories with a PC of the decoded load instruction to obtain a set of tags. This context information will be context information related to each one of the branches of the respective histories;
searching, for each one of the tags of the set of obtained tags, in the at least one prediction table a stored tag, associated to a history length that corresponds to the corresponding predefined history length, that matches the tag obtained for the decoded load instruction. Preferably, this search will be carried out in parallel in all the entries of the at least one prediction table. For the embodiment in which there is a plurality of prediction tables associated to specific history lengths, the predictor will search, for each one of the tags, only in the table having associated the history length that corresponds to the predefined history length corresponding to said tag;
determining (predicting) a potential dependence between the decoded load instruction and a potentially dependent store instruction when there is a match between one of the obtained tags and a stored tag. Preferably, the confidence counter associated with the entry of the table in which the tag is stored should also be greater than zero. By having a confidence counter with a value greater than 0, it is established that the prediction is reliable so it can be used. The potentially conflicting store instruction (on which the decode load instruction may depend) is then determined based on the distance associated with the stored tag.

In some embodiments, other different approaches can be used to determined how good or reliable a prediction is (in order to be used or discarded by the predictor) based on the confidence counter value. For example, it could be established that the confidence counter value has to be greater than a predefined threshold to consider said prediction as reliable or it might be established that if the confidence counter has its maximum value, the prediction can be used, and if it is around a predefined threshold, it may be discarded with a certain probability. Other approaches could be used.

In some embodiments, if several matches are found, the dependence having the larger history length associated to it is selected. If there is no match in the at least one prediction table, no dependences are predicted. Preferably, if one or more matches are found but the confidence counters associated with the respective prediction table entries are zero, no dependences are predicted either.

When a potential dependence is determined or predicted by the load-store dependence predictor, the dependence can be propagated to a scheduler by the out-of-order processor. To do so, for example, the processor may allocate the dependent load instruction in the load queue (LQ) and the conflicting store instruction is detected by subtracting the predicted distance from the index of the most recent store added in the store queue (SQ).

A third aspect of the disclosure is a computer program comprising instructions which, when the program is executed by a computer, cause the computer to carry out one or both of the methods previously disclosed.

A fourth aspect of the disclosure is a computer readable medium comprising instructions which, when executed by a computer, cause the computer to carry out one or both of the methods previously disclosed.

A fifth aspect of the disclosure is a processing device, such as, e.g., an out-of-order processor. The processing device comprises a load-store dependence predictor that comprises at least one prediction table. The load-store dependence predictor is configured to:
identify a dependence between a particular load instruction and a particular store instruction by detecting the particular load instruction executing prior to the particular store instruction on whose data the particular load instruction depends;
determine a history length from the particular load instruction to the particular store instruction, the history length depending on a number of branches between the particular load instruction and the particular store instruction;
determine a distance from the particular load instruction to the particular store instruction, the distance being defined as the number of store instructions between the particular load instruction and the particular store instruction; and
store the dependence identified in an entry of the at least one prediction table together with context information related to the history length and the distance previously determined.

In some embodiments, the out-of-order processor is further configured to:
decode a load instruction;
determine a history for the decoded load based on a set of predefined history lengths, the history being defined as the number of branches preceding the decoded load instruction indicated into the predefined history lengths;
combine, using a hash function, context information related to each determined histories with a PC of the decoded load instruction to obtain a set of tags;
search, for each one of the tags of the set of obtained tags, in the at least one prediction table a stored tag, associated to a history length that corresponds to the corresponding predefined history length, that matches with the tag obtained for the decoded load instruction;
determine (predict) a potential dependence between the decoded load instruction and a potentially dependent store instruction when there is a match between the obtained tag and a stored tag. Then, the potentially dependent store instruction is determined based on the distance associated to the matching stored tag.

In some embodiments, when a load instruction completes its execution and it is to be removed from the processor stream, the processor is configured to check if that load instruction had a prediction and if so, the confidence counter is updated. For example, if there was a prediction and the dependence actually happened, the confidence counter is saturated (the value is set to maximum) and, in case of failure, it is decremented by a predetermined value, e.g., one. Therefore, this confidence counter indicates how reliable a prediction is.

When a "load" completes its execution and is removed from the processor stream, it is checked if it had a prediction (a stored dependence that matched) and if so, the confidence saturated counter of the entry, in which the dependence that matched is stored, is updated. In case of success, the counter is saturated (the value is set to maximum) and, in case of failure, it is reduced by a predetermined value, e.g., one.

In some embodiments, the load-store dependence predictor comprises a plurality of prediction tables where each prediction table is associated with a particular history length. Besides, the load-store dependence predictor is further configured to store the distance between the particular load instruction and the particular store instruction in an entry of one prediction table of the plurality of prediction tables, the prediction table being selected such that the history length associated with the selected prediction table corresponds to the history length from the particular store instruction to the particular load instruction.

Therefore, the solution herein disclosed is based on the fact that each executed load instruction commonly depends on at most one store instruction. It is also based on the fact that the optimal history length, which corresponds to the minimum history length able to identify the dependence between the conflicting store instruction and the dependent load instruction, is used for training the load-store dependence predictor on conflicts.

The solution herein disclosed present some advantages over other existing solutions. Instead of using a predetermined history length (as in NoSQ for example) or a series of predetermined history lengths on which the predictor tries to "blindly" adapt itself based on hits and misses, the solution herein disclosed works identifying the youngest conflicting store instruction and the path between the dependent load instruction and the identified conflicting store instruction. Thanks to a better choice of history length, the present solution allows a shorter training time and a higher prediction accuracy, which allows to reduce the prediction failure rate, thus improving the processor performance. In addition, the number of inputs needed to predict is much lower than those of state-of-the-art techniques, as the present solution considers the history length that best fits to each particular conflict. This allows the predictor to have a smaller number of bytes than its state-of-the-art competitors.

### BRIEF DESCRIPTION OF THE DRAWINGS

To complete the description and in order to provide for a better understanding of the disclosure, a set of drawings is provided. Said drawings form an integral part of the description and illustrate an example of the disclosure, which should not be interpreted as restricting the scope of the disclosure, but just as an example of how the disclosure can be carried out.

The drawings comprise the following figures:
Figure 1 shows a flow diagram of a method for training a load-store dependence predictor, according to some embodiments of the disclosure.
Figure 2 shows an example of code with the program order, according to some embodiments of the disclosure.
Figure 3 shows a possible execution order of the code in Figure 2 wherein a memory order violation occurs, according to some embodiments of the disclosure.
Figure 4 shows a schematic view of the structure and how the load-store dependence predictor works when the memory order violation described in Figure 3 occurs, according to some embodiments of the disclosure.
Figure 5 shows a flow diagram of a method for predicting load-store dependences, according to some embodiments of the disclosure.
Figure 6 shows a schematic view of the structure and how the load-store dependence predictor works when a prediction on a potential load-store dependence is determined for a decoded load instruction, according to some embodiments of the disclosure.
Figure 7 shows a block diagram of an out-of-order processor, according to some embodiments of the disclosure.

### DESCRIPTION OF EXAMPLES

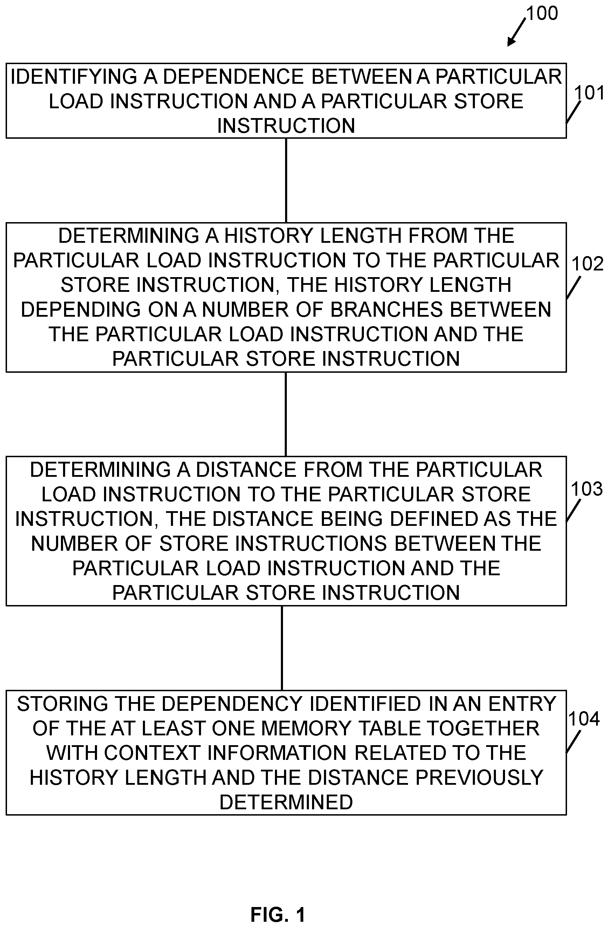

Figure 1 shows a flow diagram of a method 100 for training a load-store dependence predictor, according to some embodiments of the invention, in which the load-store dependence predictor is associated with a processing device like an out-of-order processor and comprises at least one prediction table.

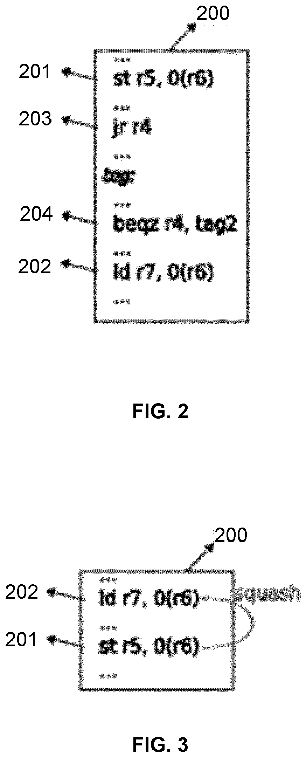

At step 101 of the method 100, a dependence between a particular load instruction and a particular store instruction is identified. Said identification is carried out by detecting the particular load instruction executing prior to the particular store instruction on whose data the particular load instruction depends. For example, Figure 2 shows an example of code 200 with the program order. This code 200 might be imposed by the program running in a processing device such as the mentioned out-of-order processor. As depicted in Figure 2, there is a store instruction 201 and a load instruction 202 that attempt to access to the same memory address (0(r6)). Between these two instructions 201,202 there may or may not be other instructions. In this particular example, there is an indirect branch 203 and a conditional branch 204. This conflict between the unresolved conflicting "store" 201 and the dependent "load" 202 can be identified by the load-store dependence predictor at step 101 of the method 100. Figure 3 shows a possible execution order of the code 200 in Figure 2 wherein a memory order violation occurs. In such example, the load instruction 202 executes before the store instruction 201 computes its target address, so a memory order violation happens and all the instructions from the load instruction 202 onwards should be re-executed.

At step 102 of the method 100, the history length from the conflicting "store" 201 to the dependent "load" 202 is calculated as the number of branches between them. For the example of Figure 2, since there is an indirect branch 203 and a conditional branch 204 between the conflicting "store" 201 and the dependent "load" 202, the history length will be '3'. For obtaining said history length, the approach `N+1' has been used, where `N' is the number of divergent branches (indirect and/or conditional branches) between the conflicting "store" 201 and the dependent "load" 202 and the '+1' corresponds to the target of the divergent branch preceding the conflicting store instruction 201. Other approaches for calculating the history length could be also used, like 'N', 'N-1', `N+2', etc.

At step 103 of the method 100, the distance from the conflicting "store" 201 to the dependent "load" 202 is calculated. Said distance will correspond to the number of store instructions between the conflicting "store" 201 and the dependent "load" 202. For the example of Figure 2, the distance will be 2 since there are 2 "stores" between the dependent "load" 202 and the conflicting "store" 201.

At step 104 of the method 100, the dependence identified is stored in one of the entries of the corresponding prediction table together with context information related to the history length and the distance previously determined. This context information is context information of the two identified branches (203,204), including the type of branch, if the branch has been taken or not and its destination address.

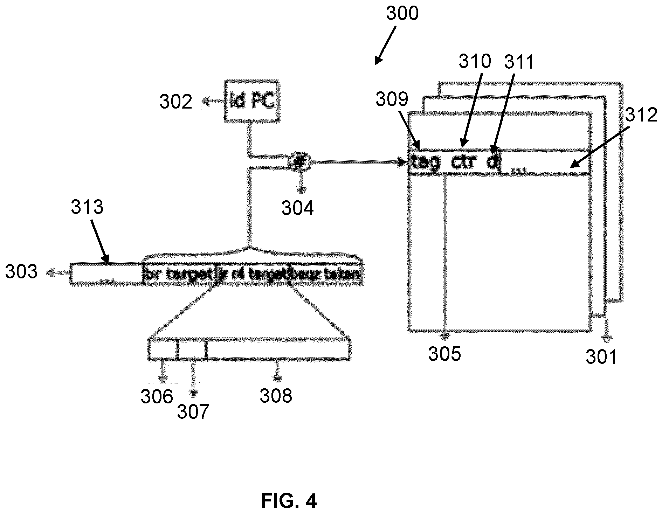

Figure 4 shows a schematic view of the structure and how the load-store dependence predictor 300 works when the order memory violation described in Figure 3 occurs. The load-store dependence predictor 300 comprises a set of set-associative prediction tables 301, each of said prediction tables 301 having several tracks or entries 305 for storing dependences. The prediction tables 301 are part of the predictor 300 and are hardware memory tables.

Each entry 305 of each one of the prediction tables 301 stores at least one tag 309 related to the dependence to reduce aliasing, a saturated counter (ctr) 310 indicating the validity of the prediction and the distance (d) 311 to the conflicting store instruction. Field 312 may contain other entries present in the same set when the tables are set- associative tables. Also, each prediction table 301 will have an associated history length (not shown in the example). In this particular example, where three prediction tables 301 are shown, the front prediction table may be associated to a history length of 2, the backmost prediction table may be associated to a history length of 8 and the middle prediction table may be associated to a history length of 4. In some other examples, there may be a different number of prediction tables associated to different history lengths.

The program counter (PC) or instruction pointer (IP) 302 of the dependent load instruction 202 is used along with context information related to the history length 303 between the conflicting store instruction 201 and the dependent load instruction 202 (in the example, the indirect branch 203 and the conditional branch 204) as well as the target of the divergent branch preceding the conflicting store instruction 201 (not shown in this figure). That is to say, in this example the history length is three, and the context information related to this history length 303 contains information about each one of said three branches, including the type of branch (conditional and/or indirect), if the branch has been taken or it is not, and its the destination address. The context information may contain information, stored in field 311, related to other branches that are not used for generating the tag to be stored in the entry 305 of the corresponding prediction table 301.

For the context information related to the history length 303 associated with the dependence, two registers (not shown in the example) with sufficient capacity to store the maximum history length used plus one may be used. One register may collect the history (information about branches between the conflicting "store" 201 and the dependent "load" 202) at decode (i.e. at the time the prediction is carried out), while the other register may collect the same history at commit (i.e. at the time the conflicting store instruction 201 and the dependent load instruction 202 are retired from the queue of the processing device or processor).

The context information related to the history length 303 is formed with the branch outcome (taken/not taken) bit for conditional branches and the destination address for indirect branches. Besides, for the branch preceding the conflicting store instruction 201, the destination address is always used. As depicted in Figure 4, the context information related to the history length 303 is coded in such a way that each branch is stored using two bits 306 for indicating whether it is conditional or it is not and if it is direct or it is not. Each branch is also stored using 1 bit 307 to indicate if the branch has been taken or it has not been taken and 'n' additional bits 308 for storing the destination address of the branch.

By combining the PC 302 of the load instruction 202 with the context information related to the history length 303 stored in the corresponding entry 305 of the prediction table 301 through the hash function 304, and index for the table 301 and a tag 309 for identifying the dependence in future search is obtained. The index indicates the entry 305 of the table 301 in which the dependence is to be stored. In some embodiments, the hash function 304 would generate `S+T' bits where `S' bit would be used for obtaining the index of the prediction table and the remaining 'T' bits would be used as the tag.

When the dependent load instruction 202 is re-executed, it would search each prediction table 301 for a conflict prediction and, in case of multiple matches, it would give priority to the prediction table 301 with the longest history length associated thereto.

The distance predicted by the load-store dependence predictor may reference, in a queue of "stores", an offset position from the head of the queue. This queue is not shown in Figure 4.

If the dependent load instruction 202 has a prediction but references a position in the queue of "stores" not between the head and the end of the queue, then the prediction is discarded.

When a "load" completes its execution and is retired, it is checked if it had a prediction, and the saturated counter of its entry is updated. In some embodiments, in case of success the counter is increased to a predefined maximum, and in case of failure, it is reduced by a predefined number, e.g., by one.

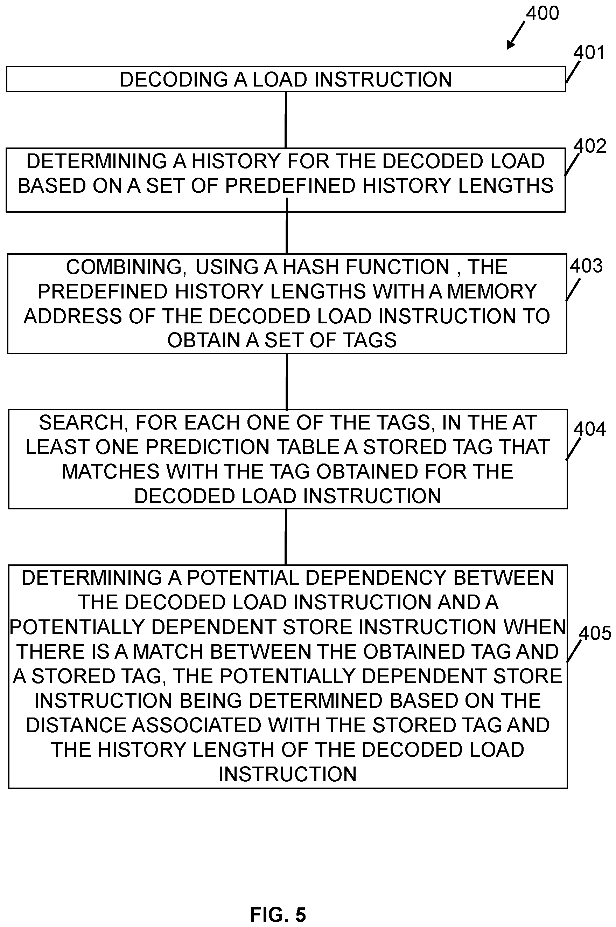

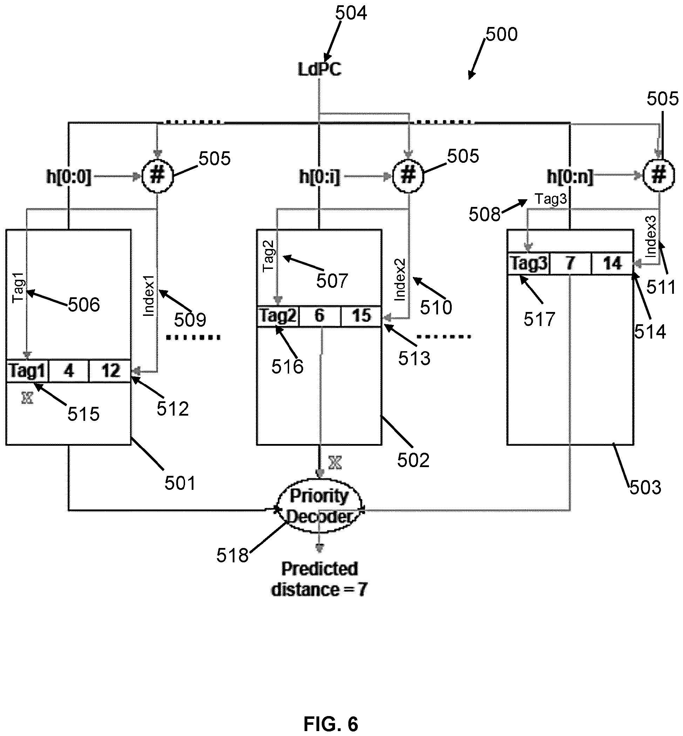

Figure 5 shows a flow diagram of a method 400 for predicting load-store dependences, according to some embodiments of the disclosure. This method may make use of the load-store dependence predictor trained as previously described. Figure 5 is going to be explained by referring to Figure 6 for a better understanding. Figure 6 shows a schematic view of the structure and how the load-store dependence predictor 500 works when a prediction on a potential load-store dependence is determined for a decoded load instruction, according to some embodiments of the disclosure.

Said Figure 6 shows three prediction tables 501-503 having different entries that store dependences (for clarity purposes only one entry is shown for each table 501-503) previously identified and stored during the predictor training process. Although Figure 6 has been depicted showing three tables, in other examples there may be a different number of tables.

At step 401 of the method 400 of Figure 5, a load instruction is decoded. The PC 504 of the decoded load instruction is obtained.

At step 402 of the method 400, a history for the decoded load instruction is determined. Said history will be based on a set of predefined history lengths and the history will be defined as the context information associated to the branches preceding the decoded load instruction indicated into the predefined history lengths. In the embodiment of Figure 6 histories h[0:0], h[0:i] and h[0:n] are determined. For example, 'i' may be 2 and 'n' may be 5, although in any other examples, numbers different than 0, 2 and 5 could have been chosen as the predefined history lengths.

At step 403 of the method 400, each one of the determined histories h[0:0], h[0:i] and h[0:n] will be combined, using a hash function 505, with the PC 504 of the decoded load instruction to obtain tags 506-508 and indexes 509-511. The indexes 509-511 are used to determine the entries 512-514 of each prediction table 501-503 in which the predictor 500 has to search for coincidences. Entry 512 in table 501 stores "Tag 1" that contains the context information related to the history length of the dependence, the associated distance with value 4 and its confidence counter with value 12. Entry 513 in table 502 stores "Tag 2" that contains the context information related to the history length of a different dependence, the associated distance with value 6 and its confidence counter with value 15. Besides, entry 514 in table 503 stores "Tag 3" that contains the context information related to the history length of this other dependence, the associated distance with value 7 and its confidence counter with value 14.

At step 404 of the method 400, for each one of the tags 506-508, the predictor searches a corresponding stored tag 515-517 in the three prediction tables 501-503 that matches the tags 506-508 obtained for the decoded load instruction.

It is important to note that since the histories h[0:0], h[0:i] and h[0:n] have delimited to correspond to a predefined history length of 0, 'i' and 'n', e.g., 0, 2 and 5, table 501 will have an associated history length of 0 (meaning that all the dependences therein stored have a history length 0), table 502 will have an associated history length of 2 (meaning that all the dependences therein stored have a history length 2) and table 503 will have an associated history length of 5 (meaning that all the dependences therein stored have a history length 5).

At step 405 of the method 400, a potential dependence between the decoded load instruction and a potentially dependent store instruction is determined (predicted) when there is a match between the obtained tag and a stored tag. For the embodiment of Figure 6, table 501 is discarded (represented in the figure with an 'X') because there is not a match between the generated tag 506 and the stored tag 515. However, there is a match between the obtained tag 507 and the stored tag 516 in the prediction table 502, but also there is a match between the obtained tag 508 and the stored tag 517 in the prediction table 503. In such case, the predictor 500 chooses, by means of the priority decode 518, the prediction from table 503 because it has an associated history length (5 for this table 503) that is larger than the history length associated to table 502 (2 for this table 502). Thus, the predictor 500 finally discard the prediction from table 502 (represented in the figure with an 'X'). Then, by taking the distance 7 from the entry 514 and applying said distance to the store queue index, the predictor 500 can determined the potentially conflicting store instruction.

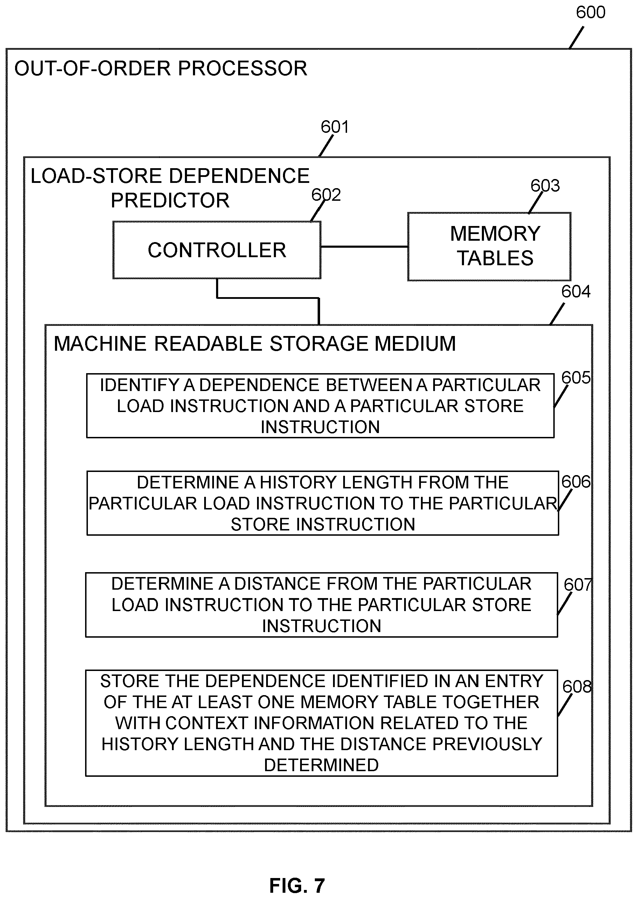

Figure 7 shows a block diagram of an out-of-order processor, according to some embodiments of the disclosure. It should be understood that the out-of-order processor or out-of-order processing device 600 depicted in FIG. 7 may include additional components and that some of the components described herein may be removed and/or modified without departing from a scope of the example out-of-order processor 600. Additionally, implementation of out-of-order processor 600 is not limited to such example. The out-of-order processor comprises a load-store dependence predictor 601 in which a machine-readable storage medium 604 stores instructions 605-608 to be executed by a controller 602 of the load-store dependence predictor 601. The load-store dependence predictor 601 is depicted as further comprising a set of prediction tables 603. It should also be understood that the load-store dependence predictor 601 may represent a combination of hardware for training itself (identifying and storing the identified dependences (updating) the memory tables 603) and predicting memory dependences between instructions executed by the out-of-order processor 600.

In such example, the controller 602 identifies 605 a dependence between a particular load instruction a particular store instruction. Then, the controller 602 determines 606 the history length form the particular load instruction to the particular store instruction. The controller 602 further determines 607 the distance from the particular load instructions to the particular store instruction and stores 608 the dependence identified in an entry of one of the prediction tables 603 together with context information related to the history length and the distance previously calculated.

The controller 602 may include hardware logic to perform the functionalities described above in relation to instructions 605-608. The machine-readable storage medium 604 may be located either in the computing device executing the machine-readable instructions, or remote from but accessible to the computing device (e.g., via a computer network) for execution.

As used herein, a "machine-readable storage medium" may be any electronic, magnetic, optical, or other physical storage apparatus to contain or store information such as executable instructions, data, and the like. For example, any machine-readable storage medium described herein may be any hardware memory such as a finite state machines or similar. Further, any machine-readable storage medium described herein may be non-transitory. In examples described herein, a machine-readable storage medium or media may be part of an article (or article of manufacture). An article or article of manufacture may refer to any manufactured single component or multiple components.

## Claims

1. A computer-implemented method (100) for training a load-store dependence predictor, the load-store dependence predictor being associated with an out-of-order processor and comprising at least one prediction table, **characterized in that** the method comprises:
identifying (101) a dependence between a particular load instruction (202) and a particular store instruction (201) by detecting the particular load instruction (202) executing prior to the particular store instruction (201) on whose data the particular load instruction depends;
determining (102) a history length from the particular load instruction (202) to the particular store instruction (201), the history length depending on a number of branches (203,204) between the particular load instruction (202) and the particular store instruction (201);
determining (103) a distance from the particular load instruction (202) to the particular store instruction (201), the distance being defined as the number of store instructions between the particular load instruction (202) and the particular store instruction (201); and
storing (104) the dependence identified in an entry of the at least one prediction table together with context information related to the history length and the distance previously determined.

2. The computer-implemented method (100) according to claim 1, wherein the history length is determined tracking the number of branches (203,204) that are decoded between the particular load instruction (202) and the particular store instruction (201).

3. The computer-implemented method (100) according to claim 1 or 2, wherein the distance is determined calculating a difference between a store queue index of a store instruction immediately preceding the particular load instruction (202) and a store queue index of the particular store instruction (201).

4. The computer-implemented method (100) according to any one of the preceding claims, wherein the load-store dependence predictor (300) comprises a plurality of prediction tables (301), each prediction table (301) being associated with a particular history length, and the step of storing (104) the dependence comprises storing the distance between the particular load instruction (202) and the particular store instruction (201) in an entry (305) of one prediction table (301) of the plurality of prediction tables (301), the prediction table (301) being selected such that the history length associated with the selected prediction table (301) corresponds to the history length from the particular load instruction (202) to the particular store instruction (201).

5. The computer-implemented method (100) according to any one of the preceding claims, wherein the history length is selected to be 'N±m', wherein `N' is the number of branches between the particular load instruction (202) and the particular store instruction (201) and 'm' is an integer equal or greater than zero, preferably, the history length is selected to be `N+1'.

6. The computer-implemented method (100) according to any one of the preceding claims, wherein the step of storing (104) the dependence identified in one entry of the at least one prediction table, comprises:
combining, using a hash function (304), the context information related to the history length (303) with a program counter (302) of the particular load instruction to obtain an index and a tag (309) for the prediction table (301), the index indicating the entry of the at least one prediction table (301) in which the dependence is to be stored and the tag (309) unequivocally identifying the dependence;
storing the tag (309) obtained and the distance between the particular load instruction (202) and the particular store instruction (201) in the entry (305) of the prediction table (301) indicated by the index; and
setting a confidence counter associated with the entry (305) of the prediction table (301) to a maximum.

7. The computer-implemented method (100) according to any one of the preceding claims, wherein the steps of determining (102) the history length, determining (103) the distance and storing (104) the dependence identified in one of the entries of the at least one prediction table is carried out at commit.

8. The computer-implemented method (100) according to any one of the preceding claims, wherein the context information related to the history length (303) further comprises, for each branch between the particular load instruction (202) and the particular store instruction (201):
at least one bit (306) indicating the type of branch, the branch being a conditional branch and/or an indirect branch;
at least one bit (307) indicating if the branch is taken or it is not; and
a set of bits (308) indicating the actual destination address taken by the branch.

9. The computer-implemented method (100) according to any one of the preceding claims, wherein the steps of the method are carried out by the load-store dependence predictor.

10. A computer-implemented method (400) for predicting a load-store dependence that makes use of a load-store dependence predictor trained according to any one of claims 1 to 9, the method comprising:
decoding (401) a load instruction;
determining (402) a history for the decoded load instruction based on a set of predefined history lengths, the history being defined as the context information associated to the branches preceding the decoded load instruction indicated into the predefined history lengths;
combining (403), using a hash function, the determined histories with a program counter (PC) of the decoded load instruction to obtain a set of tags;
searching (404), for each one of the tags of the set of obtained tags, in the at least one prediction table a stored tag, associated to a history length that corresponds to the corresponding predefined history length, that matches the tag obtained for the decoded load instruction; and
determining (405) a potential dependence between the decoded load instruction and a potentially dependent store instruction when there is a match between the obtained tag and a stored tag, the potentially dependent store instruction being determined based on the distance associated with the stored tag.

11. A computer program comprising instructions which, when the program is executed by a computer, cause the computer to carry out the methods of any one of claims 1 to 10.

12. A computer-readable medium comprising instructions which, when executed by a computer, cause the computer to carry out the methods of any one of claims 1 to 10.

13. An out-of-order processor (600), comprising:
a load-store dependence predictor (601) that comprises a controller (602) and at least one prediction table (603), **characterized in that** the controller (602) is configured to:
identify (605) a dependence between a particular load instruction and a particular store instruction by detecting the particular load instruction executing prior to the particular store instruction on whose data the particular load instruction depends;
determine (606) a history length from the particular load instruction to the particular store instruction, the history length depending on a number of branches between the particular load instruction and the particular store instruction;
determine (607) a distance from the particular load instruction to the particular store instruction, the distance being defined as the number of store instructions between the particular load instruction and the particular store instruction; and
store (608) the dependence identified in an entry of the at least one prediction table together with context information related to the history length and the distance previously determined.

14. The out-of-order processor according to claim 13, wherein the out-of-order processor (600) is further configured to:
decode a load instruction;
determine a history for the decoded load instruction based on a set of predefined history lengths, the history being defined as the number of branches preceding the decoded load instruction indicated into the predefined history lengths;
combine, using a hash function, the determined histories with a program counter (PC) of the decoded load instruction to obtain a set of tags;
search in the at least one prediction table an entry having a stored tag that corresponds to at least one of the tag obtained for the decoded load instruction; and
determine a potential dependence between the decoded load instruction and a potentially dependent store instruction when there is a match between the obtained tag and a stored tag, the potentially dependent store instruction being determined based on the distance associated to the stored tag.

15. The out-of-order processor according to claim 13 or 14, wherein the load-store dependence predictor comprises a plurality of prediction tables, each prediction table being associated to a particular history length, and the load-store dependence predictor is configured to store the distance between the particular load instruction and the particular store instruction in an entry of one prediction table of the plurality of prediction tables, the prediction table being selected such that the history length associated to the selected prediction table corresponds to the history length from the particular store instruction to the particular load instruction.
